# EUROPÄISCHE PATENTSCHRIFT

(11) **EP 2 131 178 B1**
(45) Veröffentlichungstag und Bekanntmachung des Hinweises auf die Patenterteilung: **06.04.2011**
(21) Anmeldenummer: 08010064.7
(22) Anmeldetag: 02.06.2008
(51) Int. Cl.: G01M 13/04

(54) **Diagnoseverfahren für zumindest ein Kugellager, insbesondere für ein Schrägkugellager, korrespondierendes Diagnosesystem sowie Verwendung eines derartigen Diagnosesystems**
Diagnostic method for at least one ball bearing, in particular for an angular ball bearing, a corresponding diagnostic system and the use of such a diagnostic system
Procédé de diagnostic pour au moins un roulement à billes, en particulier pour un palier à billes oblique, système de diagnostic correspondant et utilisation d'un tel système de diagnostic

(43) Veröffentlichungstag der Anmeldung: 09.12.2009
(73) Patentinhaber: SIEMENS AKTIENGESELLSCHAFT, 80333 München (DE)
(72) Erfinder: Butz, Felix, 50939 Köln (DE); Gebert, Karl, 97424 Schweinfurt (DE)

(56) Entgegenhaltungen:
- DE-A1- 19 702 234
- DE-A1-102004 050 897
- US-B1- 6 553 837

## Beschreibung

Die Erfindung betrifft ein Diagnoseverfahren für zumindest ein Kugellager, insbesondere für zumindest ein Schrägkugellagers zur Lagerung einer schnelldrehenden Spindel, wobei die von dem jeweiligen Kugellager hervorgerufenen mechanischen Schwingungen mit jeweils zumindest einem Schwingungsaufnehmer erfasst und als jeweiliges korrespondierendes Schwingungssignal ausgegeben werden.

Die Erfindung betrifft weiterhin ein Diagnosesystem für zumindest ein Kugellager mit einer Messauswerteeinheit und mit zumindest einem damit verbundenen Schwingungsaufnehmer zur messtechnischen Erfassung von mechanischen Schwingungen, die vom jeweiligen Kugellager hervorgerufen werden. Die Schwingungsaufnehmer sind zudem zur Ausgabe der erfassten mechanischen Schwingungen in Form eines jeweiligen korrespondierenden Schwingungssignals vorgesehen.

Schließlich betrifft die Erfindung eine geeignete Verwendung eines derartigen Diagnosesystems zur Diagnose zumindest eines Kugellagers, insbesondere zumindest eines Schrägkugellagers für die Lagerung einer Spindel eines Spindelsystems, insbesondere einer Werkzeugmaschine.

Bei den betrachteten Kugellagern handelt es sich um Rillenkugellager und insbesondere um Schrägkugellager. Letztere sind dazu ausgebildet, sowohl axiale als auch radiale Kräfte in Bezug auf ihre Drehachse aufzunehmen. Sie werden meist zur Lagerung einer Welle paarweise eingebaut und vorgespannt. Derartige Schrägkugellager können einreihig oder auch zweireihig ausgeführt sein. Weiterhin weisen solche Schrägkugellager einen Lagerinnenring sowie einen Lageraußenring mit einer Vielzahl von in einem Lagerkäfig geführten, zwischenliegenden Lagerkugeln. Die Fähigkeit, sowohl axiale als auch radiale Kräfte aufnehmen zu können, wird durch eine Neigung der Rollbahnen der Lagerkugeln erreicht. Ein Maß für die Neigung ist der sogenannte Druckwinkel α. Typische Werte liegen bei 15°, 18°, 25° oder 45°. Es sind auch andere Druckwinkel möglich.

Im Vergleich dazu weisen Rillenkugellager einen Druckwinkelwinkel von 0° auf. Sie sind insbesondere zur Aufnahme von radialen Kräften ausgebildet.

Es ist bekannt, Spindelsysteme mit hochdrehenden Spindeln bzw. Spindelwellen in vorzugsweise zwei Schrägkugellagern zu lagern. Dadurch ist eine axiale sowie radiale Führung der Spindelwelle möglich. Derartige schnelldrehende Spindelsysteme dienen zur Aufnahme z.B. eines Werkstücks, eines Werkzeugs, eines Fräskopfes oder eines Bohrers. Häufig sind solche Spindelsysteme Teil einer Werkzeugmaschine.

Häufig ist in solchen Spindelsysteme eine fortlaufende Überwachung der Schrägkugellager erforderlich bzw. sogar vorgeschrieben, um einen Ausfall oder einen sich andeutenden Ausfall zu erkennen und vorzugsweise vorherzusagen. Allerdings ist dies bis heute nicht mit einer ausreichend hohen Sicherheit möglich, da keine allgemein gültigen, aussagekräftigen Grenzwerte zur Ausfallwahrscheinlichkeit von schnelldrehenden Schrägkugellagern existieren. Für Spindelsysteme, die in hoher Stückzahl gefertigt werden, können zwar prozessabhängig geeignete Grenzwerte für bestimmte Maschinen, insbesondere Werkzeugmaschinen, ermittelt werden. Diese sind jedoch nur bedingt auf ähnliche Werkzeugmaschinen und ähnliche Prozesse übertragbar. Aufgrund des messtechnisch hohen Aufwandes und des damit hohen verbundenen Kostenaufwands wird daher gegenwärtig auf eine automatisierte Analyse von Schrägkugellagern verzichtet.

Zur Diagnose von schnelldrehenden Schrägkugellagern ist es weiterhin bekannt, Beschleunigungssensoren in der Nähe von Schrägkugellagern zu applizieren und die erfassten Beschleunigungssignale auszuwerten. So kann beispielsweise der Summenwert aus, mit den Beschleunigungssignalen korrespondieren Schwingungsdaten, gebildet werden, um bei einer Veränderung des Summenwertes eine Veränderung des Lagerzustandes zu signalisieren. Allerdings ist hier eine klare Zuordnung der Schwingungsdaten zu der jeweiligen betroffenen Maschinenkomponente oder zu einer vorliegenden Ursache zumeist nicht möglich.

Alternativ dazu sind Verfahren (z.B. DE19702234) bekannt, welche eine frequenzselektive Auswertung der erfassten Schwingungsdaten vornehmen. Im Gegensatz zur Auswertung der Summensignale besteht bei der frequenzselektiven Auswertung die Möglichkeit des Aufzeigens von individuellen Fehlerursachen und der Zuordnung der betroffenen Maschinenelemente. Dabei wird das Zeitsignal mittels einer Fouriertransformation in die entsprechenden sinusförmigen Schwingungsanteile zerlegt. Im Spektrum werden die jeweiligen Amplituden bzw. Pegel bei den dazugehörigen Frequenzen dargestellt. Allerdings sind Spektren für eine frühzeitige Erkennung von Wälzlagerdefekten unbrauchbar, weil die extrem energiearmen Defektanteile bzw. Frequenzanteile zumeist von energiereichen Maschinenschwingungen überdeckt werden.

Bei einem weiteren alternativen Verfahren kann das Spektrum der Hüllkurve aus dem Beschleunigungssignal ermittelt werden. Mittels eines derartigen Verfahrens ist es möglich, dass die beim Überrollen einer Störstelle in einem Lager entstehenden periodischen Kraftimpulse, die sich in den Maschinenschwingungen überlagern, separiert werden können. Dabei wird das durch Defektimpulse modulierte Zeitsignal demoduliert, d.h. es wird die Hüllkurve separiert und einer Frequenzanalyse unterzogen. Im Spektrum werden bei geeignet gefilterten Zeitsignalen nur ausschließlich Informationen über periodische überrollte Störstellen angezeigt. Stochastische Signalanteile werden unterdrückt, mit der Folge, dass unabhängig von den wesentlichen energiereicheren Maschinenschwingungen auch kleine Defekte dargestellt werden können. Dieses Verfahren weist ein vergleichsweise gutes Signal-Rausch-Verhalten auf und es ist zu dem relativ unempfindlich gegenüber Drehzahlschwankungen. Mit diesem Verfahren können Frühschäden meist einfach erkannt werden. Zudem kann das zeitliche Schadenswachstum in den Wälzlagern analysiert werden.

Nachteilig daran sind der messtechnisch große Aufwand sowie der erforderliche Parametrieraufwand für ein jeweiliges Schrägkugellager und für die jeweilige betreffende Maschine.

Ausgehend von dem eingangs genannten Stand der Technik ist es eine Aufgabe der Erfindung, ein verbessertes Diagnoseverfahren für zumindest ein Kugellager, insbesondere für zumindest ein Schrägkugellager, anzugeben.

Es ist eine weitere Aufgabe der Erfindung, ein zum Diagnoseverfahren korrespondierendes Diagnosesystem anzugeben.

Schließlich ist es eine Aufgabe der Erfindung, eine geeignete Verwendung eines derartigen Diagnosesystems anzugeben.

Die Aufgabe wird für das Diagnoseverfahren durch die Merkmale des Patentanspruchs 1 gelöst. Vorteilhafte Verfahrensvarianten sind in den Ansprüchen 2 bis 7 angegeben.

Die Aufgabe wird für das Diagnosesystem mit den Merkmalen des unabhängigen Anspruchs 8 gelöst. Vorteilhafte Ausführungsformen des Diagnosesystems sind in den abhängigen Ansprüchen 9 bis 14 angegeben. Im Anspruch 15 ist eine geeignete Verwendung des Diagnosesystems zur Diagnose zumindest eines Kugellagers, insbesondere zumindest eines Schrägkugellagers für die Lagerung einer Spindel eines Spindelsystems, insbesondere einer Werkzeugmaschine, genannt.

Erfindungsgemäß wird zumindest eine von einer aktuellen Lagerdrehfrequenz abhängige lagercharakteristische, kinematische Grundfrequenz rechnerisch ermittelt. Es wird jeweils eine entsprechende Lagerfrequenz in einem Messfrequenzspektrum des jeweiligen Schwingungssignals messtechnisch ermittelt. Es wird dann eine erste Diagnosemeldung ausgegeben, wenn zumindest eine der gemessenen Lagerfrequenzen um eine jeweilige vorgegebene Frequenzabweichung von der entsprechenden rechnerischen kinematischen Grundfrequenz abweicht. Dadurch ist in messtechnischer Hinsicht auf besonders einfache Weise eine zuverlässige Diagnose des jeweiligen Kugellagers möglich.

Vorzugsweise werden die jeweiligen gemessenen Lagerfrequenzen im laufenden Betrieb in je einem Frequenzband überwacht, welches jeweils um die aktuelle kinematische Grundfrequenz herum gebildet wird. Für den Fall, dass eine oder mehrere Lagerfrequenzen aus dem jeweiligen Frequenzband "herauswandern" sollte, wird die erste Diagnosemeldung ausgegeben. Diese Diagnosemeldung kann zudem eine Information darüber enthalten, welche der Lagerfrequenzen von der zugehörigen kinematischen Grundfrequenz in unzulässiger Weiche abgewichen ist. Die jeweils vorgegebene bzw. vorgebbare maximal zulässige Frequenzabweichung kann im Rahmen einer Typprüfung des Kugellagers oder aufgrund dessen technischer Auslegung erfolgen. Insbesondere liegt die Frequenzabweichung im einstelligen Prozentbereich im Bezug auf die zugehörige kinematische Grundfrequenz.

Grundidee der vorliegenden Erfindung ist, dass die Laufeigenschaften von Kugellagern primär durch eine Reihe kinematischer Grundgrößen festgelegt sind. Die für jedes Kugellager bekannten geometrischen Größen sind von der Relativdrehzahl zwischen Lageraußenring und Lagerinnenring, von dem Teilkreisdurchmesser des Lagers, von dem Kugeldurchmesser sowie von der Anzahl der Kugeln abhängig.

Ein einwandfreies Lager erzeugt ein breitbandiges Rauschsignal auf vergleichsweise geringem Niveau. Seine kinematischen Grundfrequenzen sind daher in der Regel nur schwach ausgeprägt. Bei geringfügiger Veränderung der Rauhigkeit in der Oberfläche der Laufbahnen oder der Wälzkörper, d.h. der Lagerkugeln, werden dagegen die Rauschsignale intensiver. Die stochastischen Schwingungen stoßen dabei die angeschlossenen Bauteile wie Kugeln, Lageraußenring und Lagerinnenring, sowie Gehäuseteile zu Strukturresonanzen (Eigenfrequenzen) an. Daher wird sich zuerst im Bereich der Resonanzen eine Veränderung der Lagerlaufeigenschaften bemerkbar machen. Wälzlagerringe und Wälzkörper, insbesondere Lagerkugeln, besitzen Eigenfrequenzen weit oberhalb der genannten kinematischen Grundfrequenzen, wobei die Eigenfrequenzen der Lagerkäfige zumeist im Bereich der kinematischen Frequenzen liegen. Mit anderen Worten ist es daher ausreichend, die betrachteten Grundfrequenzen in nur einem kleinen, unterhalb der Eigenfrequenz liegenden Frequenzbereich zu betrachten. Der messtechnische Aufwand ist dabei vorteilhaft vergleichsweise gering.

Charakteristisch sind gemäß einer vorteilhaften Ausführungsform der Erfindung insbesondere die nachfolgend aufgeführten kinematischen Grundfrequenzen
- Überrollfrequenz des Lageraußenrings:
   fa=0,5 · fn · z · [1-(DW/DT) · cos (α)],
- Überrollfrequenz des Lagerinnenrings:
   fi=0,5 · fn · z · [1-(DW/DT) · cos (α)],
- Rotationsfrequenz des Lagerkäfigs:
   fk=0,5 · fn · [1-(DW/DT) · cos (α)], und
- Überrollfrequenz eines Wälzkörperbereichs:
   fw=fn · (DT/DW) · [1-(DW/DT) · cos (α)²],
wobei fn die Drehfrequenz des Kugellagers, z die Anzahl der Lagerkugeln, DW der Durchmesser der Lagerkugeln, DT der Teilkreisdurchmesser des Kugellagers und α der Druckwinkel ist. Letzterer weist bei einem Rillenkugellager als reines Radiallager einen Wert von 0° auf. Bei einem Schrägkugellager liegen typische Druckwinkelwerte bei 15°, 18°, 25° oder 45°, wobei das Schrägkugellager mit zunehmender Gradzahl einen höheren axialen Kraftanteil aufnehmen kann.

Die jeweiligen Grundfrequenzen weisen dabei bis auf die variable Drehfrequenz des Kugellagers nur konstante Größen auf. Die Drehfrequenz des Lagers kann dabei aus dem jeweiligen Schwingungskanal separiert werden oder aus einem Drehgebersignal abgeleitet werden, welches von einem mit der Spindel verbundenen Drehgeber stammt.

Nach einer vorteilhaften Verfahrensvariante wird als die zumindest eine Lagerfrequenz diejenige ermittelt, welche an ihrer jeweiligen Position im Messfrequenzspektrum einen Maximalpegel aufweist. Dadurch wird die Zuverlässigkeit des Diagnoseverfahrens erhöht. Vorzugsweise wird fortlaufend der Pegel bei den jeweiligen Lagerfrequenzen gemessen und das jeweilige Pegelmaximum im Frequenzbereich um die zu erwartende, jeweilige kinematische Grundfrequenz herum "gesucht".

Einer weiteren Verfahrensvariante zufolge wird eine zweite Diagnosemeldung ausgegeben, wenn ein Maximalpegel zumindest einer der aktuell ermittelten Lagerfrequenzen einen jeweiligen vorgegebenen Grenzpegel überschreitet. Durch die Auswertung der Höhe der Frequenzamplituden, das heißt der Pegel, ist zudem ein Rückschluss auf die mechanische Belastung des Kugellagers möglich, wobei zunehmende Pegelwerte eine zunehmende mechanische Belastung anzeigen.

Nach einer Verfahrensvariante ist die zumindest eine kinematische Grundfrequenz eine von einem Nenndruckwinkel zwischen dem Lagerinnenring und dem Lageraußenring des jeweiligen Kugellagers abhängige Größe. Mit Nenndruckwinkel ist der herstellerseitig konstruktiv bemessene Druckwinkel bezeichnet. Grundgedanke bei dieser Verfahrensvariante ist, dass sich der betriebliche Druckwinkel ausgehend von dem Nenndruckwinkel, wie er z.B. im Neuzustand nach der Fertigung eines Schrägkugellagers vorliegt, im eingebauten Zustand des Lagers auf einer Welle verändern kann. So können sich die Vorspannung des Lagers oder thermische Einflüsse auf den Druckwinkel auswirken. Mit anderen Worten kann aus einer ermittelten betrieblichen Änderung des Druckwinkels auf geänderte Verhältnisse im eingebauten Lager während des Betriebs geschlossen werden. Durch Auswertung der Grundfrequenzen und der daraus abgeleiteten Änderung des Druckwinkels sind somit eine qualitative Bewertung eines Montageprozesses eines Schrägkugellagers auf einer Welle sowie eine qualitative Bewertung der Einstellung der Vorspannung eines solchen Lagers möglich.

Insbesondere wird die jeweils aktuell ermittelte Lagerfrequenz rechnerisch in einen aktuellen Betriebsdruckwinkel abgebildet. Mit "Betriebsdruckwinkel" ist der sich im laufenden Betrieb des Lagers verändernde Druckwinkel bezeichnet. Die Abbildung kann z.B. mittels eines mathematischen Modells erfolgen. Das Modell kann z.B. von einem CAD-Engineering-System stammen, welches das kinematische und materialtechnische Verhalten des Lagers beschreibt.

Nach einer weiteren Verfahrensvariante wird eine dritte Diagnosemeldung ausgegeben, wenn der aktuell ermittelte Betriebsdruckwinkel um eine vorgegebene maximale Druckwinkelabweichung von dem Nenndruckwinkel abweicht.

Werden die entsprechenden Schrägkugellager nicht ordnungsgemäß montiert, so wirkt sich dies auf die Reibung in den Schrägkugellagern, in Änderungen der Betriebstemperatur und schließlich in stark abfallenden Druckwinkelwerten aus. Änderungen des Druckwinkels können sich auch bei einer Änderung der Belastung bzw. bei einer Übersteigerung der Belastung über ein vorgegebenes Maß hinaus ergeben. Mit anderen Worten lassen sich Überlastzustände während des Betriebs erkennen und entsprechende Gegenmaßnahmen einleiten, wenn die ermittelte Druckwinkelabweichung den vorgegebenen Grenzwert überschreitet.

Vorzugsweise erfolgt die Beobachtung und Bewertung der ermittelten Druckwinkel mit Hilfe von Beschleunigungssensoren, die nur in einem relevanten engen Frequenzfenster sensitiv sein müssen. Verschiebt sich beispielsweise die Lagerfrequenz des Lageraußenringes aus dem vorgewählten Frequenzfenster, so kann daraus geschlossen werden, dass Betriebsbedingungen nicht mehr den Vorgaben entsprechen. Es können dann geeignete Schutzmaßnahmen eingeleitet werden.

Die Aufgabe der Erfindung wird weiterhin durch ein Diagnosesystem gelöst, welches mit den erfindungsgemäßen Verfahren korrespondiert. In diesem Fall weist die Messauswerteeinheit des Diagnosesystems Mittel zur rechnerischen Ermittlung zumindest einer von einer aktuellen Lagerdrehfrequenz abhängigen lagercharakteristischen, kinematischen Grundfrequenz auf. Weiterhin weist die Messauswerteeinheit Frequenzmessmittel zur Ermittlung jeweils einer entsprechenden Lagerfrequenz in einem Messfrequenzspektrum des jeweiligen erfassten Schwingungssignals auf. Die Messauswerteeinheit weist ferner Vergleichsmittel zur Ausgabe einer ersten Diagnosemeldung auf, falls zumindest eine der gemessenen Lagerfrequenzen um eine jeweilige vorgegebene Frequenzabweichung von der entsprechenden rechnerischen kinematischen Grundfrequenz abweicht.

Die Messwerteeinheit ist vorzugsweise eine mikroprozessorgestützte Rechnereinheit, wie z.B. ein Mikroprozessor oder ein Mikrocontroller.

Das erfindungsgemäße Diagnosesystem ist zur Diagnose zumindest eines Kugellagers, insbesondere zur Diagnose zumindest eines Schrägkugellagers für die Lagerung einer Spindel eines Spindelsystems, vorgesehen. Ein derartiges Spindelsystem ist typischerweise Bestandteil einer Werkzeugmaschine, insbesondere in der Automatisierungs- oder Fertigungstechnik.

Die Erfindung sowie vorteilhafte Ausführungsformen der Erfindung werden anhand der nachfolgenden Figuren näher erläutert. Dabei zeigen:
- FIG 1: eine perspektivische Ansicht eines Schrägkugella- gers,
- FIG 2: einen axialen Schnitt durch das Schrägkugellager gemäß FIG 1,
- FIG 3: ein Ablaufdiagramm zur Durchführung des erfindungs- gemäßen Diagnoseverfahrens und
- FIG 4: beispielhaft ein Diagnosesystem mit einer Messaus- werteeinheit mit zwei angeschlossenen Schwingungs- aufnehmern zur Erfassung von mechanischen Schwin- gungen im Lagerbereich eines Spindelsystems.

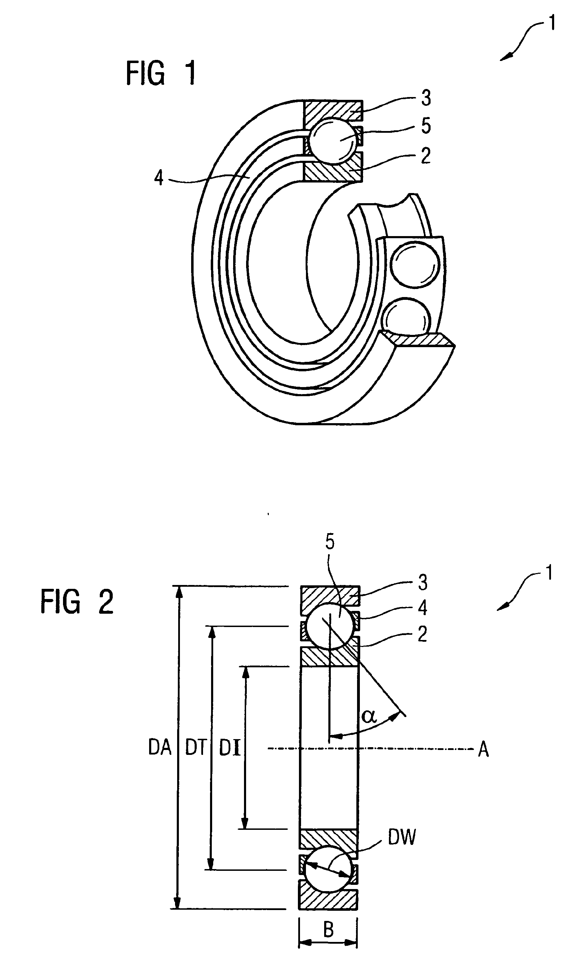

FIG 1 zeigt eine perspektivische Ansicht eines Schrägkugellagers 1 als Beispiel für ein Kugellager. Es weist ein mit dem Bezugszeichen 2 gekennzeichneten Lagerinnenring, einen Lageraußenring 3 sowie eine Vielzahl von Lagerkugeln 5 in einem Lagerkäfig 4 auf, welche zwischen den beiden Lagerringen 2, 3 angeordnet sind.

FIG 2 zeigt einen axialen Schnitt durch das beispielhafte Schrägkugellager 1 gemäß FIG 1. In dieser Darstellung ist die Neigung der Rollenbahnen zwischen dem Lagerinnenring 2 und dem Lageraußenring 3 um den Druckwinkel α eingezeichnet. Dieser beträgt im vorliegenden Beispiel 40°, wobei üblicherweise ein Druckwinkel von 25° Standard ist. Mit A ist die Rotationssymmetrieachse bzw. Drehachse des Schrägkugellagers 1 bezeichnet. Mit DI ist der Innendurchmesser, mit DA der Außendurchmesser des Schrägkugellagers 1 bezeichnet. Mit DT ist der dazwischenliegende Teilkreisdurchmesser des Schrägkugellagers 1 bezeichnet. Darüber hinaus weist das gezeigte Lager 1 eine axiale Breite B auf. Mit DW ist der Durchmesser der Lagerkugel 5 bezeichnet.

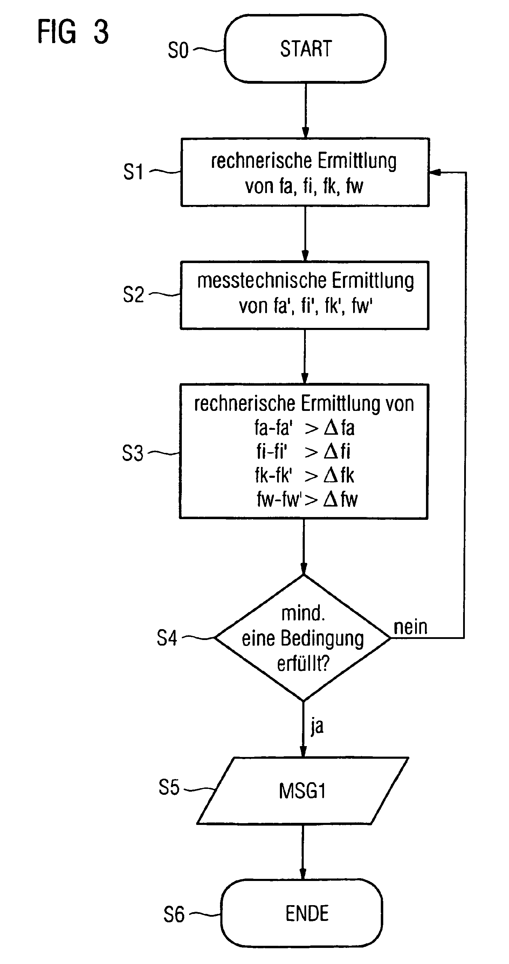

FIG 3 zeigt ein Ablaufdiagramm zur Durchführung des erfindungsgemäßen Diagnoseverfahrens.

Mit S0 ist ein Startschritt bezeichnet. In diesem Schritt S0 erfolgt unter anderem die Initialisierung der konstanten Größen für die Anzahl der Lagerkugeln, für den Durchmesser der Lagerkugeln, für den Teilkreisdurchmesser des Kugellagers und für den Nenndruckwinkel sowie für die jeweiligen maximal zulässigen Frequenzabweichungen Δfa, Δfi, Δfk, Δfw.

Im darauf folgenden Schritt S1 werden die von einer aktuellen Lagerdrehfrequenz abhängige lagercharakteristischen, kinematische Grundfrequenzen fa, fi, fk, fw, das heißt eine Überrollfrequenz fa eines Lageraußenrings, eine Überrollfrequenz fi eines Lagerinnenrings, eine Rotationsfrequenz fk eines Lagerkäfigs und eine Überrollfrequenz fw eines Wälzkörperbereichs des jeweiligen Kugellagers 1, rechnerisch ermittelt. Vorzugsweise wird die mechanische Schwingung mittels eines Beschleunigungssensors erfasst. Je nach Anwendungsfall kann es ausreichen, auch nur eine oder zwei Größen zu betrachten, wie z.B. die Grundfrequenzen fa oder fi.

Im Schritt S2 wird jeweils eine entsprechende Lagerfrequenz fa', fi', fk', fw' in einem Messfrequenzspektrum des jeweiligen Schwingungssignals messtechnisch ermittelt.

Im Schritt S3 werden die jeweiligen Differenzen aus den kinematischen Grundfrequenzen fa, fi, fk, fw und den entsprechenden gemessenen Lagerfrequenzen fa', fi', fk', fw' gebildet und das jeweilige Ergebnis mit der jeweiligen vorgegebenen Frequenzabweichung Δfa, Δfi, Δfk, Δfw verglichen.

Im Schritt S4 wird geprüft, ob zumindest eine der im vorherigen Schritt S3 formulierten Bedingungen erfüllt ist. Ist dies nicht der Fall, so wird zum Schritt S1 zurückverzweigt.

Im anderen Fall wird im Schritt S5 eine erste Diagnosemeldung MSG1 ausgegeben. Diese kann zur Einleitung entsprechender Gegenmaßnahmen, wie z.B. der Abschaltung des Spindelsystems bzw. der entsprechenden Maschine, herangezogen werden.

Mit S6 ist der Endschritt bezeichnet.

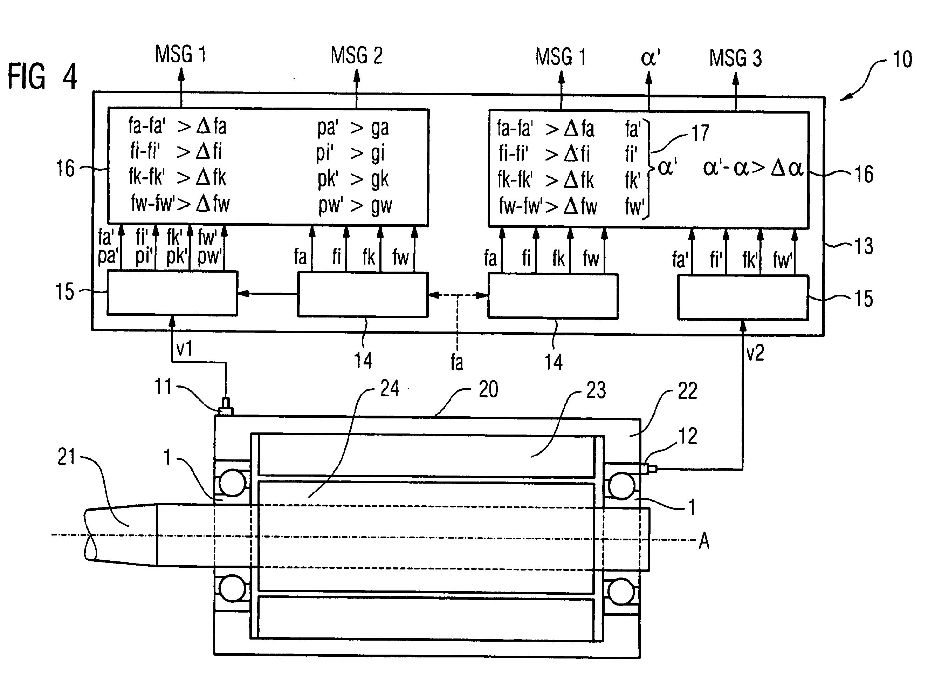

FIG 4 zeigt beispielhaft ein Diagnosesystem 10 mit einer Messauswerteeinheit 13 mit beispielhaft zwei angeschlossenen Schwingungsaufnehmern 11, 12 zur Erfassung der jeweiligen mechanischen Schwingungen an dem dargestellten Spindelsystem 20.

Im unteren Teil der FIG 4 ist ein Spindelsystem 20, insbesondere ein motorisch angetriebenes Spindelsystem 20, dargestellt. Dieses Spindelsystem 20 kann Bestandteil einer Werkzeugmaschine sein. Es weist eine Spindel 21 auf, welche in zwei Schrägkugellagern 1 sowohl radial als auch axial geführt ist. Die beiden Lager 1 sind in einem Maschinengehäuse 22 bzw. Spindelgehäuse fest angebracht. Zwischen den beiden Lagern 1 befinden sich ein maschinenseitig fest angeordneter Stator 23 sowie ein drehfest auf der Spindel 21 angeordneter Rotor 24. Im Betrieb erzeugen die beiden Schrägkugellager 1 mechanische Schwingungen, die beim linken Lager 1 durch einen Schwingungsaufnehmer 11 erfasst werden. Dieser Schwingungsaufnehmer 11 ist an dem Spindelgehäuse 22 in der Nähe des linken Lagers 1, das heißt mittelbar am Lager 1, angeordnet. Im Vergleich dazu ist der zweite Schwingungsaufnehmer 12 zur Erfassung der mechanischen Schwingungen direkt am Lager 1 bzw. an dessen Lageraußenring befestigt. Mit V1, V2 sind die entsprechenden Schwingungssignale bezeichnet.

Die im oberen Teil der FIG dargestellte Messauswerteeinheit 13 weist für jedes Schwingungssignal V1, V2 mit dem Bezugszeichen 14 bezeichnete Mittel auf. Vorzugsweise handelt es sich bei diesen Mitteln 14 um Softwareroutinen, welche beispielhaft vier von einer aktuellen Lagerdrehfrequenz fn abhängigen lagercharakteristischen, kinematischen Grundfrequenzen fa, fi, fk, fw rechnerisch ermitteln. Im Beispiel der FIG 4 ist zudem eine Eingabemöglichkeit für die Lagerdrehfrequenz fn gestrichelt eingezeichnet. Die Lagerfrequenz fn kann z.B. von einem Drehgeber stammen, welcher mit der Spindelwelle 21 des Spindelsystems 20 verbunden ist. Sie kann alternativ mittels entsprechender, nicht weiter gezeigter Filtermittel aus dem jeweiligen Schwingungssignal V1, V2 ermittelt werden. Weiterhin weist die Messauswerteeinheit 13 jeweils ein Frequenzmessmittel 15 zur Ermittlung jeweils einer entsprechenden Lagerfrequenz fa', fi', fk', fw' in einem Messfrequenzspektrum des jeweiligen erfassten Schwingungssignals V1, V2 auf. Mit fa' ist die der Überrollfrequenz fa des Lageraußenrings 3 entsprechende gemessene Lagerfrequenz, mit fi' die der Überrollfrequenz fi des Lagerinnenrings 2 entsprechende gemessene Lagerfrequenz, mit fk' die der Rotationsfrequenz fk des Lagerkäfigs 4 entsprechende gemessene Lagerfrequenz und mit fw' die der Überrollfrequenz fw des Wälzkörperbereichs des jeweiligen Kugellagers 1 jeweils entsprechende gemessene Lagerfrequenz bezeichnet. Vorzugsweise werden die Lagerfrequenzen fa', fi', fk', fw' mittels digitaler Filter, wie z.B. mittels einer FFT (für Fast Fourier Transformation) rechnerisch ermittelt. Dem jeweiligen Mittel 14 kann weiterhin ein Analog/Digital-Umsetzer vorgeschaltet sein oder im jeweiligen Mittel 14 selbst bereits vorhanden sein, welcher die jeweiligen Schwingungssignale V1, V2 in digitale Messwerte zur rechnerischen Weiterverarbeitung umsetzt.

Das linke der beiden Frequenzmessmittel 15 weist zudem einen Pegelmesser auf, um jeweils einen Maximalpegel pa', pi', pk', pw' der aktuell ermittelten Lagerfrequenzen fa', fi', fk', fw' zu messen. Im einfachsten Fall sind die Frequenzmessmittel 15 dazu ausgebildet, rechnerisch ein lokales Maximum im Bereich der jeweiligen erwarteten oder nachzuverfolgenden Lagerfrequenz fa', fi', fk', fw' zu suchen. Die Suche erfolgt dabei vorzugsweise jeweils in einem Frequenzbereich um die durch das zugehörige Mittel 14 rechnerisch ermittelte jeweilige kinematische Grundfrequenz fa, fi, fk, fw herum. Die entsprechenden Werte für die Grundfrequenzen fa, fi, fk, fw können über eine nicht weiter bezeichnete Datenverbindung vom Mittel 14 zum linken Frequenzmessmittel 15 übertragen werden.

Den jeweiligen beiden Mitteln 14 und Frequenzmitteln 15 ist ein Vergleichsmittel 16 nachgeschaltet. Es dient zur Ausgabe einer ersten Diagnosemeldung MSG1, falls zumindest eine der gemessenen Lagerfrequenzen fa', fi', fk', fw' um eine jeweilige vorgegebene Frequenzabweichung Δfa, Δfi, Δfk, Δfw von der entsprechenden rechnerischen kinematischen Grundfrequenz fa, fi, fk, fw abweicht. Zudem weist das linke Vergleichsmittel 16 Mittel zur Ausgabe einer zweiten Diagnosemeldung MSG2 auf, falls zumindest ein gemessener Maximalpegel pa', pi' 'pk', pw' einen jeweiligen vorgegebenen Grenzpegel ga, gi, gk, gw überschreitet. Dagegen weist beispielhaft das rechte Vergleichsmittel 16 Mittel zur Ausgabe einer dritten Diagnosemeldung MSG3 auf, falls ein aktuell ermittelte Betriebsdruckwinkel α' um eine vorgegebene maximale Druckwinkelabweichung Δα von dem Nenndruckwinkel α abweicht. Hierzu kann das rechte Vergleichsmittel 16 Abbildungsmittel 17 aufweisen, um die aktuell ermittelten Lagerfrequenzen fa', fi', fk', fw' in einen aktuellen Betriebsdruckwinkel α' auf Basis eines rechnerischen Modells abzubilden. Schließlich ist das rechte Vergleichsmittel 16 dazu ausgebildet, den rechnerisch ermittelten aktuellen Betriebsdruckwinkel α' auch auszugeben, um diesen gegebenenfalls durch eine übergeordnete Steuerung oder Diagnoseeinheit weiterzuverarbeiten.

## Patentansprüche

1. Diagnoseverfahren für zumindest ein Kugellager (1), insbesondere für zumindest ein Schrägkugellager, wobei die von dem jeweiligen Kugellager (1) hervorgerufenen mechanischen Schwingungen mit jeweils zumindest einem Schwingungsaufnehmer (11,12) erfasst und als jeweiliges korrespondierendes Schwingungssignal (V1,V2) ausgegeben werden, **dadurch gekennzeichnet,**
- **dass** zumindest eine von einer aktuellen Lagerdrehfrequenz (fn) abhängige lagercharakteristische, kinematische Grundfrequenz (fa,fi,fk,fw) rechnerisch ermittelt wird,
- **dass** jeweils eine entsprechende Lagerfrequenz (fa',fi',fk', fw') in einem Messfrequenzspektrum des jeweiligen Schwingungssignals (V1,V2) messtechnisch ermittelt wird und
- **dass** eine erste Diagnosemeldung (MSG1) ausgegeben wird, wenn zumindest eine der gemessenen Lagerfrequenzen (fa', fi',fk',fw') um eine jeweilige vorgegebene Frequenzabweichung (Δfa, Δfi, Δfk, Δfw) von der entsprechenden rechnerischen kinematischen Grundfrequenz (fa,fi,fk,fw) abweicht.

2. Diagnoseverfahren nach Anspruch 1, **dadurch gekennzeichnet, dass** als die zumindest eine Lagerfrequenz (fa',fi',fk',fw') diejenige ermittelt wird, welche an ihrer jeweiligen Position im Messfrequenzspektrum einen Maximalpegel (pa,pi,pk,pw) aufweist.

3. Diagnoseverfahren nach Anspruch 1 oder 2, **dadurch gekennzeichnet, dass** eine zweite Diagnosemeldung (MSG2) ausgegeben wird, wenn ein Maximalpegel (pa',pi', pk',pw') zumindest einer der aktuell ermittelten Lagerfrequenzen (fa',fi',fk',fw') einen jeweiligen vorgegebenen Grenzpegel (ga,gi,gk,gw) überschreitet.

4. Diagnoseverfahren nach einem der vorangegangenen Ansprüche, **dadurch gekennzeichnet, dass** die zumindest eine kinematische Grundfrequenz (fa,fi,fk,fw) eine Überrollfrequenz (fa) eines Lageraußenrings (3), eine Überrollfrequenz (fi) eines Lagerinnenrings (2), eine Rotationsfrequenz (fk) eines Lagerkäfigs (4) oder eine Überrollfrequenz (fw) eines Wälzkörperbereichs des jeweiligen Kugellagers (1) ist.

5. Diagnoseverfahren nach einem der vorangegangenen Ansprüche, **dadurch gekennzeichnet, dass** die zumindest eine kinematische Grundfrequenz (fa,fi,fk,fw) eine von einem Nenndruckwinkel (α) zwischen dem Lagerinnenring (3) und dem Lageraußenring (2) des jeweiligen Kugellagers (1) abhängige Größe ist.

6. Diagnoseverfahren nach Anspruch 5, **dadurch gekennzeichnet, dass** die jeweils aktuell ermittelte Lagerfrequenz (fa',fi',fk',fw') rechnerisch in einen aktuellen Betriebsdruckwinkel (α') abgebildet wird.

7. Diagnoseverfahren nach Anspruch 6, **dadurch gekennzeichnet, dass** eine dritte Diagnosemeldung (MSG3) ausgegeben wird, wenn der aktuell ermittelte Betriebsdruckwinkel (α') um eine vorgegebene maximale Druckwinkelabweichung (Δα) von dem Nenndruckwinkel (α) abweicht.

8. Diagnosesystem für zumindest ein Kugellager (1), insbesondere für ein Schrägkugellager, mit einer Messauswerteeinheit (13) und mit zumindest einem damit verbundenen Schwingungsaufnehmer (11,12) zur messtechnischen Erfassung von mechanischen Schwingungen, die vom jeweiligen Kugellager (1) hervorgerufen werden, und zur Ausgabe der erfassten mechanischen Schwingungen in Form eines jeweiligen korrespondierenden Schwingungssignals (V1,V2),
**dadurch gekennzeichnet,**
- **dass** die Messauswerteeinheit (13) Mittel (14) zur rechnerischen Ermittlung zumindest einer von einer aktuellen Lagerdrehfrequenz (fn) abhängigen lagercharakteristischen, kinematischen Grundfrequenz (fa,fi,fk,fw) aufweist,
- **dass** die Messauswerteeinheit (13) Frequenzmessmittel (15) zur Ermittlung jeweils einer entsprechenden Lagerfrequenz (fa',fi',fk',fw') in einem Messfrequenzspektrum des jeweiligen erfassten Schwingungssignals (V1,V2) aufweist und
- **dass** die Messauswerteeinheit (13) Vergleichsmittel (16) zur Ausgabe einer ersten Diagnosemeldung (MSG1) aufweist, falls zumindest eine der gemessenen Lagerfrequenzen (fa',fi', fk',fw') um eine jeweilige vorgegebene Frequenzabweichung (Δfa, Δfi, Δfk, Δfw) von der entsprechenden rechnerischen kinematischen Grundfrequenz (fa,fi,fk,fw) abweicht.

9. Diagnosesystem nach Anspruch 8, **dadurch gekennzeichnet, dass** die Frequenzmessmittel (15) einen Pegelmesser zum Messen eines jeweiligen Maximalpegels (pa,pi,pk,pw) zur Ermittlung der zumindest einen Lagerfrequenz (fa',fi',fk',fw') an ihrer jeweiligen Position im Messfrequenzspektrum aufweist.

10. Diagnosesystem nach Anspruch 8 oder 9, **dadurch gekennzeichnet, dass** die Frequenzmessmittel (15) einen Pegelmesser zum Messen eines Maximalpegels (pa', pi',pk',pw') zumindest einer der aktuell ermittelten Lagerfrequenzen (fa',fi',fk',fw') und Mittel zur Ausgabe einer zweiten Diagnosemeldung (MSG2) aufweist, falls zumindest ein Maximalpegel (pa',pi',pk',pw') einen jeweiligen vorgegebenen Grenzpegel (ga,gi,gk,gw) überschreitet.

11. Diagnosesystem nach einem der Ansprüche 8 bis 10, **dadurch gekennzeichnet, dass** die zumindest eine kinematische Grundfrequenz (fa,fi,fk,fw) eine Überrollfrequenz (fa) eines Lageraußenrings (3), eine Überrollfrequenz (fi) eines Lagerinnenrings (2), eine Rotationsfrequenz (fk) eines Lagerkäfigs (4) oder eine Überrollfrequenz (fw) eines Wälzkörperbereichs des jeweiligen Kugellagers (1) ist.

12. Diagnosesystem nach einem der Ansprüche 8 bis 11, **dadurch gekennzeichnet, dass** die zumindest eine kinematische Grundfrequenz (fa,fi,fk,fw) eine von einem Nenndruckwinkel (α) zwischen dem Lagerinnenring (3) und dem Lageraußenring (2) des jeweiligen Kugellagers (1) abhängige Größe ist.

13. Diagnosesystem nach Anspruch 12, **dadurch gekennzeichnet, dass** die Messauswerteeinheit (13) Abbildungsmittel (17) zur Abbildung der jeweils aktuell ermittelten Lagerfrequenz (fa',fi',fk',fw') in einen aktuellen Betriebsdruckwinkel (α') auf Basis eines rechnerischen Modells aufweist.

14. Diagnosesystem nach Anspruch 13, **dadurch gekennzeichnet, dass** die Messauswerteeinheit (13) Mittel zur Ausgabe einer dritten Diagnosemeldung (MSG3) aufweist, falls der aktuell ermittelte Betriebsdruckwinkel (α') um eine vorgegebene maximale Druckwinkelabweichung (Δα) von dem Nenndruckwinkel (α) abweicht.

15. Verwendung eines Diagnosesystems (10) nach einem der Ansprüche 8 bis 14 zur Diagnose zumindest eines Kugellagers (1), insbesondere zumindest eines Schrägkugellagers, für die Lagerung einer Spindel (21) eines Spindelsystems (20), insbesondere einer Werkzeugmaschine.

## Claims

1. Diagnostic method for at least one ball bearing (1), in particular for at least one oblique ball bearing, the mechanical vibrations caused by the respective ball bearing (1) being acquired by respectively at least one vibration sensor (11, 12), and being output as respective corresponding vibration signal (V1, V2), **characterized**
- **in that** at least one bearing-characteristic, fundamental kinematic frequency (fa, fi, fk, fw) dependent on a current bearing rotational frequency (fn) is determined by computation,
- **in that** in each case a corresponding bearing frequency (fa', fi', fk', fw') in a measurement frequency spectrum of the respective vibration signal (V1, V2) is determined by measurement, and
- **in that** a first diagnostic message (MSG1) is output when at least one of the measured bearing frequencies (fa', fi', fk', fw') deviates by a respective prescribed frequency deviation (Δfa, Δfi, Δfk, Δfw) from the corresponding computational fundamental kinematic frequency (fa, fi, fk, fw).

2. Diagnostic method according to Claim 1, **characterized in that that** bearing frequency that has a maximum level (pa, pi, pk, pw) at its respective position in the measurement frequency spectrum is determined as the at least one bearing frequency (fa', fi', fk', fw').

3. Diagnostic method according to Claim 1 or 2, **characterized in that** a second diagnostic message (MSG2) is output when a maximum level (pa', pi', pk', pw') of at least one of the currently determined bearing frequencies (fa', fi', fk', fw') exceeds a respective prescribed limit level (ga, gi, gk, gw).

4. Diagnostic method according to one of the preceding claims, **characterized in that** the at least one fundamental kinematic frequency (fa, fi, fk, fw) is a rollover frequency (fa) of a bearing outer race (3), a rollover frequency (fi) of a bearing inner race (2), a rotational frequency (fk) of a bearing cage (4), or a rollover frequency (fw) of a rolling body region of the respective ball bearing (1).

5. Diagnostic method according to one of the preceding claims, **characterized in that** the at least one fundamental kinematic frequency (fa, fi, fk, fw) is a variable depending on a nominal pressure angle (α) between the bearing inner race (2) and the bearing outer race (3) of the respective ball bearing (1).

6. Diagnostic method according to Claim 5, **characterized in that** the respectively currently determined bearing frequency (fa', fi', fk', fw') is mapped computationally into a current operating pressure angle (α').

7. Diagnostic method according to Claim 6, **characterized in that** a third diagnostic message (MSG3) is output when the currently determined operating pressure angle (α') deviates by a prescribed maximum pressure angle deviation (Δα) from the nominal pressure angle (α).

8. Diagnostic system for at least one ball bearing (1), in particular for an oblique ball bearing, having a measurement evaluation unit (13) and, connected thereto, at least one vibration sensor (11, 12) for acquiring by measurement mechanical vibrations that are caused by the respective ball bearing (1), and for outputting the acquired mechanical vibrations in the form of a respective corresponding vibration signal (V1, V2), **characterized**
- **in that** the measurement evaluation unit (13) has means (14) for determining by computation at least one bearing characteristic, fundamental kinematic frequency (fa, fi, fk, fw) dependent on a current bearing rotational frequency (fn),
- **in that** the measurement evaluation unit (13) has frequency measuring means (15) for determining in each case a corresponding bearing frequency (fa', fi', fk', fw') in a measurement frequency spectrum of the respective acquired vibration signal (V1, V2), and
- **in that** the measurement evaluation unit (13) has comparing means (16) for outputting a first diagnostic message (MSG1) if at least one of the measured bearing frequencies (fa', fi', fk', fw') deviates by a respective prescribed frequency deviation (Δfa, Δfi, Δfk, Δfw) from the corresponding computational fundamental kinematic frequency (fa, fi, fk, fw).

9. Diagnostic system according to Claim 8, **characterized in that** the frequency measurement means (15) has a level meter for measuring a respective maximum level (pa, pi, pk, pw) in order to determine the at least one bearing frequency (fa', fi', fk', fw') at its respective position in the measurement frequency spectrum.

10. Diagnostic system according to Claim 8 or 9, **characterized in that** the frequency measuring means (15) has a level meter for measuring a maximum level (pa', pi', pk', pw') of at least one of the currently determined bearing frequencies (fa', fi', fk', fw') and means for outputting a second diagnostic message (MSG2) if at least one maximum level (pa', pi', pk', pw') exceeds a respective prescribed limit level (ga, gi, gk, gw).

11. Diagnostic system according to one of Claims 8 to 10, **characterized in that** the at least one fundamental kinematic frequency (fa, fi, fk, fw) is a rollover frequency (fa) of a bearing outer race (3), a rollover frequency (fi) of a bearing inner race (2), a rotational frequency (fk) of a bearing cage (4) or a rollover frequency (fw) of a rolling body region of the respective ball bearing (1).

12. Diagnostic system according to one of Claims 8 to 11, **characterized in that** the at least one fundamental kinematic frequency (fa, fi, fk, fw) is a variable depending on a nominal pressure angle (α) between the bearing inner race (2) and the bearing outer race (3) of the respective ball bearing (1).

13. Diagnostic system according to Claim 12, **characterized in that** the measurement evaluation unit (13) has mapping means (17) for mapping the respectively currently determined bearing frequency (fa', fi', fk', fw') into a current operating pressure angle (α') on the basis of a computational model.

14. Diagnostic system according to Claim 13, **characterized in that** the measurement evaluation unit (13) has means for outputting a third diagnostic message (MSG3), if the currently determined operating pressure angle (α') deviates by a prescribed maximum pressure angle deviation (Δα) from the nominal pressure angle (α).

15. Use of a diagnostic system (10) according to one of Claims 8 to 14 for diagnosing at least one ball bearing (1), in particular at least one oblique ball bearing, for supporting a spindle (21) of a spindle system (20), in particular of a machine tool.

## Revendications

1. Procédé de diagnostic pour au moins un roulement ( 1 ) à billes, notamment pour au moins un palier à billes oblique, dans lequel on détecte, par respectivement au moins un enregistreur ( 11, 12 ) d'oscillations, les oscillations mécaniques provoquées par le roulement (1) à billes respectif et on les émet en tant que signal ( V1, V2 ) correspondant respectif d'oscillations,
**caractérisé**
- **en ce que** l'on détermine par le calcul au moins une fréquence ( fa, fi, fk, fw ) fondamentale cinématique caractéristique du roulement et dépendant d'une fréquence ( fn ) de rotation instantanée du roulement,
- **en ce que** l'on détermine par une technique de mesure respectivement une fréquence (fa', fi', fk', fw' ) correspondante du roulement dans un spectre de fréquence de mesure du signal ( V1, V2 ) d'oscillations respectif et
- **en ce que** l'on émet un premier message ( MSG1 ) de diagnostic, lorsqu'au moins l'une des fréquences ( fa', fi', fk', fw' ) du roulement mesurées s'écarte de la fréquence ( fa, fi, fk, fw ) de base cinématique correspondante obtenue par le calcul d'un écart ( Δfa, Δfi, Δfk, Δfw ) de fréquence respectif prescrit.

2. Procédé de diagnostic suivant la revendication 1, **caractérisé en ce que** l'on détermine comme la au moins une fréquence ( fa', fi', fk', fw' ) du roulement celle qui a un niveau ( pa', pi', pk', pw' ) maximum dans le spectre de fréquence de mesure à sa position respective.

3. Procédé de diagnostic suivant la revendication 1 ou 2, **caractérisé en ce que** l'on émet un deuxième message ( MSG2 ) de diagnostic, lorsqu'un niveau ( pa', pi', pk', pw' ) maximum d'au moins l'une des fréquences ( fa', fi', fk', fw' ) du roulement déterminées instantanément dépasse un niveau ( ga, gi, gk, gw ) limite prescrit respectif.

4. Procédé de diagnostic suivant l'une des revendications précédentes, **caractérisé en ce que** la au moins une fréquence ( fa, fi, fk, fw ) fondamentale cinématique est une fréquence ( fa) de sur-rotation d'une bague ( 3 ) extérieure du roulement, une fréquence ( fi ) de sur-rotation d'une bague ( 2 ) intérieure du roulement, une fréquence ( fk ) de rotation d'une cage ( 4 ) du roulement ou une fréquence ( fw ) de sur-rotation d'une zone d'organe de roulement du roulement ( 1 ) à billes respectif.

5. Procédé de diagnostic suivant l'une des revendications précédentes, **caractérisé en ce que** la au moins une fréquence ( fa, fi, fk, fw ) fondamentale cinématique est une grandeur qui dépend d'un angle ( α ) de pression nominale entre la bague (3) intérieure et la bague (2) extérieure du roulement ( 1 ) à billes respectif.

6. Procédé de diagnostic suivant la revendication 5, **caractérisé en ce que** l'on transforme par le calcul la fréquence (fa', fi', fk', fw') du roulement déterminée instantanément en un angle ( α' ) de pression de fonctionnement instantanée.

7. Procédé de diagnostic suivant la revendication 6, **caractérisé en ce que** l'on émet un troisième message ( MSG3 ) de diagnostic si l'angle ( α' ) de pression de fonctionnement déterminé instantanément s'écarte de l'angle ( α ) de pression nominal d'un écart ( Δα ) d'angle de pression maximum prescrit.

8. Système de diagnostic pour au moins un roulement ( 1 ) à billes, notamment pour un palier à billes oblique, comprenant une unité ( 13 ) d'exploitation de mesure et comprenant au moins un récepteur ( 11, 12 ) d'oscillations, qui y est relié pour détecter par une technique de mesure des oscillations mécaniques qui sont provoquées par le roulement ( 1 ) à billes respectif et pour émettre les oscillations mécaniques détectées sous la forme d'un signal (V1, V2 ) d'oscillations correspondant respectif,
**caractérisé**
- **en ce que** l'unité ( 13 ) d'exploitation de mesure comporte des moyens ( 14 ) de détermination par le calcul d'au moins une fréquence (fa, fi, fk, fw ) fondamentale cinématique caractéristique du roulement, qui dépend d'une fréquence ( fn ) de rotation du roulement instantanée,
- **en ce que** l'unité ( 13 ) d'exploitation de mesure comporte des moyens (15) de mesure de fréquence pour la détermination d'une fréquence ( fa', fi', fk', fw' ) du roulement correspondant dans un spectre de fréquence de mesure du signal ( V1, V2 ) d'oscillations détecté respectivement et
- **en ce que** l'unité ( 13 ) d'exploitation de mesure comporte des moyens (16) de comparaison pour émettre un premier message (MSG1) de diagnostic, si au moins l'une des fréquences (fa', fi', fk', fw') du roulement mesurées s'écarte de la fréquence ( fa, fi, fk, fw ) fondamentale cinématique correspondante obtenue par le calcul d'un écart ( Δfa, Δfi, Δfk, Δfw ) de fréquence prescrite respectif.

9. Système de diagnostic suivant la revendication 8, **caractérisé en ce que** les moyens (15) de mesure de la fréquence comportent un dispositif de mesure de niveau pour mesurer un niveau ( pa, pi, pk, pw ) maximum respectif pour la détermination de la au moins une fréquence ( fa', fi', fk', fw' ) du roulement dans sa position respective dans le spectre de fréquence de mesure.

10. Système de diagnostic suivant la revendication 8 ou 9, **caractérisé en ce que** les moyens (15) de mesure de la fréquence comportent un dispositif de mesure de niveau pour mesurer un niveau ( pa', pi', pk', pw' ) maximum d'au moins l'une des fréquences ( fa', fi', fk', fw' ) du roulement déterminées instantanément et des moyens d'émission d'un deuxième message ( MSG2 ) de diagnostic, si au moins un niveau ( pa', pi', pk', pw' ) maximum dépasse un niveau ( ga, gi, gk, gw ) limite prescrit respectivement.

11. Système de diagnostic suivant l'une des revendications 8 à 10, **caractérisé en ce que** la au moins une fréquence ( fa, fi, fk, fw ) fondamentale cinématique est une fréquence ( fa ) de sur-rotation d'une bague ( 3 ) extérieure du roulement, une fréquence ( fi ) de sur-rotation d'une bague ( 2 ) intérieure du roulement, une fréquence ( fk ) de rotation d'une cage ( 4 ) du roulement ou une fréquence ( fw ) de sur-rotation d'une zone d'un organe de roulement du roulement (1) à billes respectif.

12. Système de diagnostic suivant l'une des revendications 8 à 11, **caractérisé en ce que** la au moins une fréquence ( fa, fi, fk, fw ) fondamentale cinématique est une grandeur qui dépend d'un angle ( α ) de pression nominale entre la bague ( 3 ) intérieure et la bague ( 2 ) extérieure du roulement ( 1 ) à billes respectif.

13. Système de diagnostic suivant la revendication 12, **caractérisé en ce que** l'unité ( 13 ) d'exploitation de mesure comporte des moyens de transformation de la fréquence ( fa', fi', fk', fw' ) du roulement déterminée instantanément respectivement en un angle ( α' ) de pression de fonctionnement instantanée sur la base d'un modèle obtenu par le calcul.

14. Système de diagnostic suivant la revendication 12, **caractérisé en ce que** l'unité ( 13 ) d'exploitation de mesure comporte des moyens d'émission d'un troisième message ( MSG3 ) de diagnostic, si l'angle ( α' ) de pression de fonctionnement déterminée instantanément s'écarte de l'angle ( α ) de pression nominale d'un écart ( Δα ) d'angle de pression maximum prescrit.

15. Utilisation d'un système ( 10 ) de diagnostic suivant l'une des revendications 8 à 14, pour le diagnostic d'au moins un roulement ( 1 ) à billes, notamment d'au moins un palier à billes oblique, pour le montage d'une broche (21) d'un système ( 20 ) à broche, notamment d'une machine-outil.
